# EUROPÄISCHE PATENTSCHRIFT

(11) **EP 1 879 092 B1**
(45) Veröffentlichungstag und Bekanntmachung des Hinweises auf die Patenterteilung: **15.01.2014**
(21) Anmeldenummer: 07111702.2
(22) Anmeldetag: 04.07.2007
(51) Int. Cl.: G05F 1/563, G06F 1/28, H02J 1/06, H04L 12/10

(54) **Verfahren zum Regeln einer Busgerätespannung und Vorschalteinrichtung**
Method for regulating bus voltage and preswitching device
Procédé destiné à régler la tension d'un appareil de bus et dispositif d'entrée

(30) Priorität: 14.07.2006 DE 102006032797
(43) Veröffentlichungstag der Anmeldung: 16.01.2008
(73) Patentinhaber: Siemens Aktiengesellschaft, 80333 München (DE)
(72) Erfinder: Fichtner, Norbert, 84069 Schierling (DE); Haible, Jürgen, 90427 Nürnberg (DE); Munz, Dieter, 91315 Höchstadt (DE)

(56) Entgegenhaltungen:
- EP-A- 1 124 299
- EP-A- 1 684 187
- EP-A- 1 684 457
- DE-A1- 10 147 924

## Beschreibung

Die Erfindung betrifft ein Verfahren zum Regeln einer Busgerätespannung nach dem Oberbegriff von Patentanspruch 1 sowie eine Vorschalteinrichtung nach dem Oberbegriff von Patentanspruch 6. Ein solches Verfahren und eine solche Vorschalteinrichtung sind aus der DE 101 47 924 A1 bekannt.

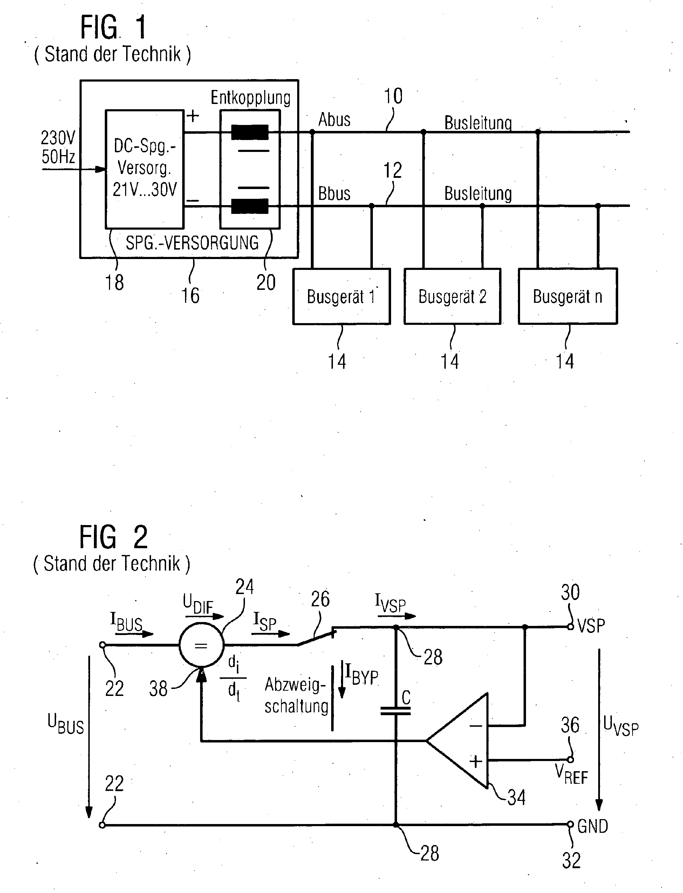

FIG 1 zeigt ein typisches Bussystem, wie es Stand der Technik ist. Es umfasst zwei Busleitungen, nämlich eine erste Busleitung 10 (Abus) und eine zweite Busleitung 12 (Bbus). An der Busleitung angeschlossen sind eine Vielzahl von Busgeräten 14. Exemplarisch gezeigt sind drei Busgeräte (Busgerät 1, Busgerät 2, Busgerät n), wobei diese eine beliebige Zahl n von Busgeräten repräsentieren. n kann sehr groß werden, z.B. die Zahl 256 erreichen.

Es ist in dem Bussystem vorgesehen, über die Busleitung 10 und 12 die Busgeräte 14 gleichzeitig mit Spannung und mit Datensignalen zur Ansteuerung der Busgeräte 14 zu versorgen. Eine Spannungsversorgung 16 empfängt über einen Eingang eine typische Netzspannung von 230 V mit 50 Hz Frequenz und wandelt diese in einer Einheit 18 in eine Gleichspannung von zwischen 21 V und 30 V um. Zwischen der Einheit 18 und der Busleitung 10 und 12 findet eine Entkopplung statt (Einheit 20).

Weil über die Busleitungen 10 und 12 sowohl die von der Spannungsversorgung 18 erzeugte Gleichspannung übertragen wird als auch Datensignale, muss seitens der Busgeräte 14 gewährleistet sein, dass Spannungsversorgung und Datenübertragung sich nicht gegenseitig beeinträchtigen. Beispielsweise könnte die Datenübertragung durch die Spannungsversorgung in den Busteilnehmern bedämpft werden und dadurch die Übertragungsreichweite abnehmen.

In den Busgeräten gemäß dem Stand der Technik wurde aus diesem Grund ein Eingangsübertrager eingesetzt, der relativ groß und teuer ist und mit einer relativ großen induktiven Belastung einhergeht, die die maximale Anzahl der Busteilnehmer begrenzt.

Ohne einen Eingangsübertrager kommt sowohl ein Verfahren als auch eine Einrichtung zur Spannungsversorgung gemäß der DE 101 47 924 A1 aus.

Die Vorschalteinrichtung aus dieser Druckschrift ist in FIG 2 schematisch dargestellt. Über zwei Eingangsanschlüssen 22 liegt die Busspannung U_{BUS} an. In Reihe geschaltet befindet sich eine Stromquelle 24, an der eine Spannung U_{DIF} abfällt und ein Schalter 26. Der Strom I_{BUS} wird von der Stromquelle zum Strom I_{SP} gewandelt. Hinter dem Schalter 26 ist ein Knotenpunkt 28 vorgesehen, der mit einem weiteren Knotenpunkt 28 über einen Kondensator C verbunden ist, der somit zu den Eingängen 22 parallel geschaltet ist. In FIG 2 auf der rechten Seite steht am Ausgang 30 die Gerätespannung U_{VSP} zur Verfügung, und zwar gegen Masse (am Ausgang 32). Die DE 101 47 924 A1 verwendet den Ansatz, dass U_{VSP} nahezu gleich U_{BUS} sein soll. Um die Datenübertragung zu ermöglichen, musste hier eine zusätzliche Lösung gefunden werden. Bei der Datenübertragung sinkt U_{BUS} nämlich um einige Volt ab und könnte daher kleiner werden als U_{VSP}. Dann würde der Strom I_{SP} und damit auch I_{BUS} auf Null sinken. Aufgrund dieser schnellen großen Stromänderung wurde die Datenübertragung negativ beeinflusst. Dies steht im Widerspruch dazu, dass eine hohe Anzahl von Busgeräten 14 an den Kommunikationsbus angeschlossen werden soll. Der Schalter 26 schaltet nun während der Datenübertragung und einer entsprechenden Absenkung von U_{BUS} auf eine Abzweigschaltung um, so dass es ermöglicht wird, dass ein Strom I_{BYP} ("Bypass"-Strom) fließt. Idealerweise wird I_{BYP} so gewählt, dass sich während der Datenübertragung I_{SP} und somit auch I_{BUS} nicht ändert.

Das Umschalten mit Hilfe des Schalters 26 erfolgt typischerweise nur während einer sehr kurzen Zeitdauer, z. B. während 35 µs. Während dieser Zeitdauer kann sich jedoch der Kondensator C entladen. Um den Kondensator nach dem Zurückschalten in die in FIG 2 gezeigte Stellung 26 wieder aufzuladen, muss die Stromquelle 24 den Strom I_{SP} erhöhen. Wenn die Datenübertragung längere Zeit dauert und eine Vielzahl von Signalen übertragen werden, wird I_{SP} dauerhaft erhöht, solange die Datenübertragung andauert. Im zeitlichen Mittel soll I_{VSP} gleich dem Wert von I_{SP} sein, der vor der Datenübertragung floss. Das zeitliche Mittel erstreckt sich über eine Vielzahl von Umschaltvorgängen mit Hilfe des Schalters 26.

Eine Erhöhung des Strom I_{SP} ist auch bei einer Änderung der an den Anschlüssen 30 und 32 anliegenden Last erforderlich. Erhöht sich die Last rapide, kann die Spannung U_{VSP} einbrechen, was durch Erhöhung von I_{VSP} und somit von I_{SP} ausgeglichen werden kann. I_{BYP} wird auch immer dann aktiviert, wenn U_{VSP} so groß wird, dass I_{SP} nicht in U_{VSP} fließen kann, z. B. auch wenn eine Last an U_{VCP} weggeschaltet wird.

Um eine Erhöhung von I_{SP} einzuleiten, ist ein Operationsverstärker 34 vorgesehen. Dessen negativer Eingang ist mit dem Ausgangsanschluss 30 vorgesehen, an dem U_{VSP} anliegt. Der positive Eingang des Operationsverstärkers 34 ist mit einem Anschluss 36 verbunden, an dem eine Referenzspannung V_{REF} anliegt, die üblicherweise eine von U_{BUS} abhängige Spannung ist, z. B. um 2 V kleiner als U_{BUS} ist. Der Ausgang des Operationsverstärkers 34 ist mit der Stromquelle 24 verbunden, was durch den Pfeil 38 symbolisiert ist. In der Stromquelle 24 oder auch vorgeschaltet ist sind Mittel zum Steuern der Stromquelle 24 vorgesehen, welche das Ausgangssignal des Operationsverstärkers 34 empfangen.

Die DE 101 47 924 A1 gibt keine weiteren Details zur Regelung des Stroms I_{SP} an. Bei der Regelung des Stroms tritt folgende Schwierigkeit auf: Ist der Strom bei Empfang von Datensignalen zu regeln, wie oben beschrieben, darf die Erhöhung des Stroms I_{SP} pro Zeiteinheit nicht zu stark sein, damit die Stromänderung nicht Spannungsänderungen auf dem Bus bewirkt, welche fälschlicherweise als Signal interpretiert werden. Ist der Strom hingegen bei Änderungen der Last an den Anschlüssen 30 und 32 zu regeln, so ist der Strom I_{SP} möglichst schnell zu erhöhen, d. h. mit hoher Änderung seiner Stromstärke pro Zeiteinheit.

Es ist Aufgabe der Erfindung, ein Verfahren zum Regeln einer Busgerätespannung und eine Vorschalteinrichtung bereitzustellen, mit dem bzw. mit der dem erwähnten Konflikt bei der Regelung Rechnung getragen wird.

Die Aufgabe wird erfindungsgemäß durch ein Verfahren mit den Merkmalen nach Patenanspruch 1 und eine Vorschalteinrichtung mit den Merkmalen nach Patentanspruch 6 gelöst.

Somit umfasst das erfindungsgemäße Verfahren, dass beim Regeln eine Auswahl zwischen zumindest zwei Regelszenarien anhand vorgegebener Kriterien erfolgt, welche die Auswertung von Betriebsparametern beinhalten, wobei bei Auswahl eines Regelszenarios die Stromstärke durch die Stromquelle mit einer ersten Änderung pro Zeiteinheit, die aufgrund einer Kennlinie dieser ersten Änderung bezüglich einer vorgegebenen Größe festgelegt wird, geändert wird und bei Auswahl eines zweiten Regelszenarios die Stromstärke durch die Stromquelle mit einer zweiten Änderung pro Zeiteinheit, die aufgrund einer Kennlinie dieser zweiten Änderung bezüglich einer vorgegebenen Größe festgelegt wird, geändert wird, wobei sich die beiden Kennlinien voneinander unterscheiden.

Durch die Einführung zweier verschiedener Regelszenarien kann der Strom I_{SP} je nach Regelsituation geeignet angepasst werden. Hierbei wird man bei Empfang von Datensignalen das erste Regelszenario wählen, bei dem der Anstieg des Stroms I_{SP} pro Zeiteinheit entsprechend dem ersten Wert klein sein soll. Bei Änderungen der Last wird man, wenn sie einen bestimmten Umfang überschreiten, das zweite Regelszenario auswählen, dem-gemäß dann die Stromstärke stärker pro Zeiteinheit ansteigt als beim ersten Regelszenario.

Die vorgegebenen Kriterien können insbesondere die Auswertung bestimmter Betriebsparameter beinhalten. Da diese sich während der Regelung auch ändern können, ist gemäß einer bevorzugten Ausführungsform vorgesehen, dass die Auswahl wiederholt erfolgt, so dass gegebenenfalls ein Wechsel des Regelszenarios stattfinden kann.

Die vorgegebenen Kriterien sind bei einer bevorzugten Ausführungsform so gestaltet, dass sowohl die Busspannung als auch die Busgerätespannung, mit anderen Worten die am Eingang der Vorschalteinrichtung (siehe FIG 2) anliegende Spannung als auch die am Ausgang der Vorschalteinrichtung anliegende Spannung, berücksichtigt werden. Also erfolgt die Auswahl bevorzugt in Abhängigkeit von der Busspannung und der Busgerätespannung. Dies kann beispielsweise derart aussehen, dass zunächst mit dem ersten Regelszenario begonnen wird und in Abhängigkeit von der Größe eines Spannungsunterschiedes zwischen der Busspannung und der Busgerätespannung zum zweiten Regelszenario übergegangen wird. Hierbei kann insbesondere ein Schwellwertkriterium verwendet werden. Es wird z. B. zum zweiten Regelszenario genau dann übergangen, wenn sich aus einem Subtrahieren der Busgerätespannung und einer (möglicherweise) an der Stromquelle abfallenden Spannung von der Busspannung ergebende Wert einen Schwellwert überschreitet. Es muss dann nur dieser sich ergebende Wert überwacht und ständig oder zumindest wiederholt abgefragt werden. Die Verwendung des Schwellwertkriteriums ermöglicht beispielsweise die Verwendung eines Operationsverstärkers.

Bevorzugt legen die beiden Kennlinien die jeweilige Änderung in Abhängigkeit von der Stromstärke des über die Spannungsanschlüsse fließenden Stroms, also I_{VSP} in FIG 2, fest. Der Begriff der Kennlinie kann beinhalten, dass zumindest für einen Abschnitt der vorgegebenen Größe, vorliegend also der Stromstärke I_{VSP}, die vorgegebene Änderung konstant ist.

Die erfindungsgemäße Vorschalteinrichtung ist dadurch gekennzeichnet, dass sie Mittel zum Steuern umfasst, die die Stromquelle derart ansteuern, dass der abgegebene Strom während des Regelns mit vorgegebener zeitlicher Änderung erhöht wird, wobei für die Vorgabe der zeitlichen Änderung eine Auswahl aus zwei verschiedenen Kennlinien ermöglicht ist, anhand derer die Änderung festgelegt wird.

Bevorzugt sind die Mittel zum Steuern der Stromquelle dazu ausgelegt, die Auswahl in Abhängigkeit von der am Eingang anliegenden Spannung und von der am Ausgang anliegenden Spannung zu treffen. Dies bedeutet insbesondere, das den Mitteln zum Steuern die am Eingang und Ausgang anliegenden Spannungen zur elektronischen Weiterverarbeitung zugeführt werden. Es kann auch außerhalb der Mittel zum Steuern eine Vorverarbeitung entsprechender Signale stattfinden.

Bei einer bevorzugten Ausführungsform umfasst die Vorschalteinrichtung einen Operationsverstärker, dessen einer Eingang mit dem Ausgang der Vorschalteinrichtung verbunden ist, an dessen zweitem Eingang eine Spannung zugeführt wird, die von der am Eingang der Vorschalteinrichtung anliegenden Spannung abhängig ist (beispielsweise um einen Offset verringert ist), und dessen Ausgang mit den Mitteln zum Steuern der Stromquelle verbunden ist.

Nachfolgend werden bevorzugte Ausführungsformen der Erfindung unter Bezug auf die Zeichnung beschrieben, in der:
- FIG 1: schematisch ein Bussystem gemäß dem Stand der Technik veranschaulicht;
- FIG 2: schematisch eine Vorschalteinrichtung gemäß dem Stand der Technik veranschaulicht;
- FIG 3: einen Graphen des von einer Stromquelle der Vorschalteinrichtung abgegebenen Stroms bei erfindungsgemäßer Regelung zugeordnet zu einem Graphen der Busgerätespannung veranschaulicht;
- FIG 4: schematisch eine mögliche Abhängigkeit eines während eines ersten Regelszenarios vorgegebenen Stromanstiegs von dem in der Vorschalteinrichtung fließenden Strom veranschaulicht; und
- FIG 5: schematisch eine mögliche Abhängigkeit eines während eines zweiten Regelszenarios vorgegebenen Stromanstiegs von dem in der Vorschalteinrichtung fließenden Strom veranschaulicht.

Die Erfindung macht von einer Vorschalteinrichtung Gebrauch, wie sie in FIG 2 gezeigt ist und oben beschrieben wurde. Lediglich die Ansteuerung der Stromquelle 24 erfolgt über den Stand der Technik hinaus in nachfolgend beschriebener erfindungsgemäßer Weise.

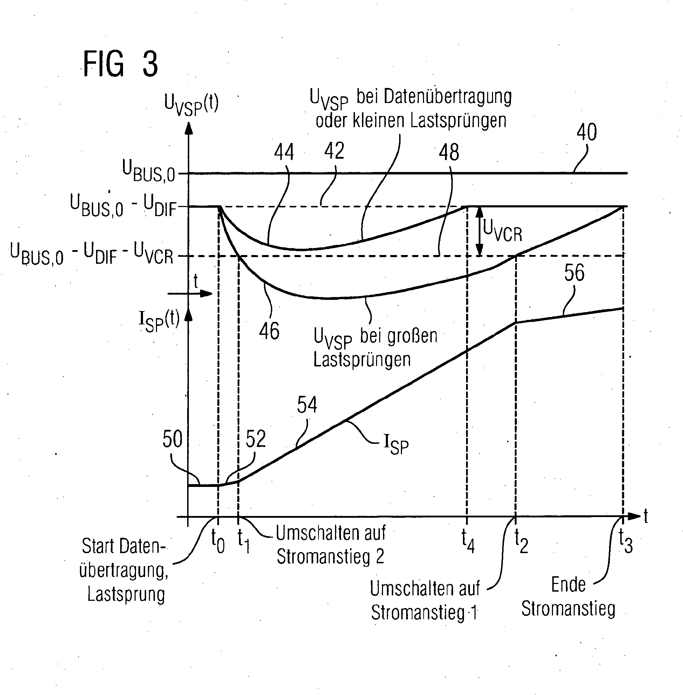

FIG 3 stellt in seinem oberen Teil auf der x-Achse eine Zeit t dar und auf y-Achse die Busgerätespannung U_{VSP} (t). Auf der y-Achse eingezeichnet sind drei konstante Werte. Zum einen ist ein Wert U_{BUS,0} als konstant eingezeichnet. Dies ist die Bus-Grundspannung, also die Busspannung, die herrscht, wenn keine Datenübertragung erfolgt. Zur Orientierung ist parallel zur x-Achse eine Gerade 40 auf der Höhe des y-Wertes U_{BUS,0} eingezeichnet. Ebenfalls konstant ist die über die Stromquelle 24 aus FIG 2 abfallende Spannung U_{DIF}. Somit ist auch die Differenz zwischen U_{BUS,0} und U_{DIF} konstant, siehe die Gerade 40 im Vergleich zur teilweise gestrichelt eingezeichneten Gerade 42 in FIG 3.

Diese Gerade 42 entspricht der Busgerätespannung, welche vorherrscht, wenn keine Daten übertragen werden. Bei Datenübertragung oder kleinen Lastsprüngen (der an den Anschlüssen 30 und 32 anliegenden Last) bricht U_{VSP} beispielsweise so ein, wie es anhand der Kurve 44 gezeigt ist. Bei großen Lastsprüngen bricht die Busgerätespannung U_{VSP} weiter ein, siehe die Kurve 46.

Die Kurven 44 und 46 sind in Bezug zu setzen zu einer weiteren in FIG 3 eingezeichneten Geraden, nämlich der Geraden 48. Zur Definition eines Schwellwertkriteriums wurde eine konstante Spannung U_{VCR} festgelegt, und die Spannung entsprechend der Geraden 42 wurde um diesen Offsetwert verringert. Die Spannung U_{VCR} ist so gewählt, dass die Kurve 44 oberhalb der Geraden 48 bleibt und die Kurve 46 die Gerade 48 schneidet und sich dann unterhalb die Gerade 48 bewegt. Ist die Kurve 44 ein typischer Spannungsverlauf der Busgerätespannung bei Datenübertragung und die Kurve 46 ein typischer Verlauf der Busgerätespannung bei großen Lastsprüngen, so kann anhand eines Überschreitens der Gerade 48 erkannt werden, ob der Spannungseinbruch aufgrund einer Datenübertragung oder aufgrund von großen Lastsprüngen erfolgt. (Zwischen Datenübertragung und kleinen Lastsprüngen kann nicht unterschieden werden, was aber auch nicht notwendig ist.)

Es wird nun auf die Ansteuerung der Stromquelle 24 eingegangen: FIG 3 zeigt in ihrem unteren Teil den Wert der Stromstärke I_{SP}(t) bei einer Regelung im Falle von großen Lastsprüngen. Der im unteren Teil von FIG 3 gezeigte Stromstärkengraph kann somit der Kurve 46 zugeordnet werden.

Zum Zeitpunkt t₀ weicht die Spannungskurve 46 erstmals von dem den konstanten Wert repräsentierenden Gerade 42 ab, d. h. der Spannungseinbruch beginnt. Auch die Kurve 44 ist so eingezeichnet, dass zum Zeitpunkt t₀ der Spannungseinbruch beginnt. Vor dem Zeitpunkt t₀ war der von der Stromquelle 24 abgegebene Strom I_{SP} konstant gehalten worden, siehe Kurvenabschnitt 50. Nach Erkennen des Einbruchs der Spannung zum Zeitpunkt t₀ beginnt die Stromquelle, den abgegebenen Strom I_{SP} zu erhöhen, siehe Kurvenabschnitt 52. Es wird somit ein erstes Regelszenario eingeleitet. Der Anstieg des Stroms I_{SP} ist hierbei konstant gezeigt. Der konstante Stromanstieg 1 ist so gewählt, dass er bei Datenübertragung keine Änderung in der Spannung derart hervorruft, dass möglicherweise so erzeugte Spannungsänderungen mit Signalen verwechselt werden.

Zum Zeitpunkt t₁ schneidet die Kurve 46 gerade die Gerade 48. Aufgrund des definierten Schwellwertkriteriums ist somit klar, dass der Spannungseinbruch, wie er sich in der Kurve 46 niederschlägt, auf einen großen Lastsprung zurückzuführen ist, und dass keine Datenübertragung Ursache des Spannungseinbruchs ist. Deswegen besteht keine weitere Notwendigkeit mehr, den Strom wie im Abschnitt 52 mit relativ moderatem Stromanstieg 1 zu erhöhen. Stattdessen wird ein zweites Regelszenario eingeleitet. Im Rahmen dieses zweiten Regelszenarios wird der Strom I_{SP} stärker erhöht, und zwar ebenfalls mit vorgegebenem Stromanstieg, dem Stromanstieg 2, wobei Stromanstieg 2 größer als Stromanstieg 1 ist. Im Abschnitt 54 der Stromstärkenkurve ist diese somit steiler als im Abschnitt 52.

Nach und nach erholt sich wegen der Erhöhung des von der Stromquelle 24 abgegebenen Stroms I_{SP} die Busgerätespannung U_{VSP}. Diese Erholung zeigt sich darin, dass sich der Spannungsabfall im Rahmen der Kurve 46 nach dem Zeitpunkt t₁ immer weniger steil fortsetzt, bis es schließlich nicht mehr zu einem weiteren Spannungsabfall kommt, sondern die Spannung wieder steigt. Zum Zeitpunkt t₂ schneidet die steigende Spannung abermals die Gerade 48. Die Regelung der Stromquelle 24 kehrt genau zu diesem Zeitpunkt zum ersten Regelszenario zurück, weil der Spannungsbereich erreicht wurde, in dem sich die Busgerätespannung auch bei Datenübertragung bewegt (vgl. Kurve 44). Gemäß dem ersten Szenario wird die Stromstärkenkurve nun mit dem Abschnitt 56 weiter erhöht, abermals mit der bereits in dem Abschnitt 52 verwendeten Steigung, also dem Stromanstieg 1. Zum Zeitpunkt t₃ erreicht die Busgerätespannung dann wieder den Wert entsprechend der Gerade 42, so dass keine weitere Erhöhung des von der Stromquelle 24 abgegebenen Stroms I_{SP} mehr notwendig ist.

Für die Fortsetzung der Stromkurve bestehen mehrere Wahlmöglichkeiten. Diesen ist gemeinsam, dass grundsätzlich zumindest nach einer Übergangszeit wieder auf den Wert des Stroms I_{SP} zurückgekehrt wird, den dieser im Abschnitt 50 hat.

In FIG 3 nicht dargestellt ist die Regelung des Stroms I_{SP}, wie sie bei einem Spannungseinbruch der Busgerätespannung gemäß der Kurve 44 erfolgt. Es ist klar, dass auch dann zum Zeitpunkt t₀, zum Beginn des Spannungseinbruchs also, das erste Regelszenario begonnen wird. Da die Kurve 44 an keiner Stelle die Gerade 48 schneidet und überschreitet, verlängert sich dann der gezeigte Abschnitt 52, insbesondere erfolgt zum Zeitpunkt t₁ kein Wechsel zum zweiten Regelszenario. Der Strom I_{SP} steigt also mit dem Stromanstieg 1 an, bis der Zeitpunkt t₄ erreicht ist, in dem die Kurve 44 wieder auf den Wert entsprechend der Gerade 42 zurückkehrt. Dann wird die Regelung beendet.

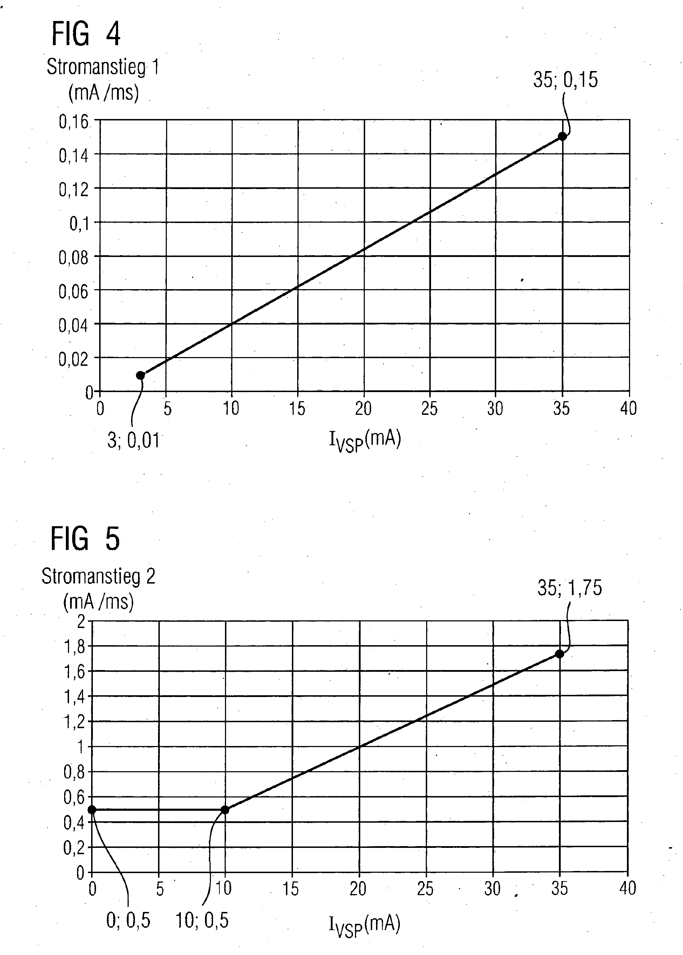

Der Stromanstieg ist beim ersten und beim zweiten Regelszenario jeweils durch eine Kennlinie vorgegeben. Der Stromanstieg ist auch während des Regelvorgangs entsprechend der Kennlinien änderbar. Ein möglicher Parameter, von dem der Stromanstieg abhängig sein kann, ist der Strom I_{VSP}. I_{VSP} ist grundsätzlich gleich dem von der Stromquelle 24 abgegebenen Strom I_{SP}, solange der Schalter 26 nicht den Strom I_{SP} über die Abzweigschaltung leitet. FIG 4 zeigt nun mögliche Werte des Stromanstiegs 1, also des beim ersten Regelszenarios verwendeten Stromanstiegs (siehe Abschnitte 52 und 56 im Graphen von FIG 3, angegeben in mA/ms in Abhängigkeit von I_{VSP}). FIG 5 zeigt entsprechende Werte des Stromanstiegs 2 in derselben Maßeinheit ebenfalls in Abhängigkeit von I_{VSP}.

Es gilt jeweils die Abhängigkeit in FIG 4 und FIG 5. Die aktuelle Stromsteilheit ergibt sich direkt aus dem aktuellen Strom I_{VSP}.

In FIG 3 wird beispielsweise von jeweils konstanten Stromanstiegen ausgegangen. Die Stromsteilheit könnte auch einen negativen Wert haben, und zwar sollte sie dies beim Wegschalten von Lasten an U_{VSP}. Dieser negative Wert könnte beispielsweise der Wert aus FIG 4/FIG 5 sein, nur mit negativen Vorzeichen.

## Patentansprüche

1. Verfahren zum Regeln einer Busgerätespannung (U_{VSP}) durch eine Vorschalteinrichtung, der über einen Kommunikationsbus eine Busspannung (U_{BUS}) zugeführt wird, welche zwischen Eingangsanschlüssen (22) der Vorschalteinrichtung anliegt,
- wobei die Vorschalteinrichtung Spannungsanschlüsse (30, 32) für die Busgerätespannung (U_{VSP}) aufweist, an denen eine variable Last anliegt,
- wobei bei Empfang von Datensignalen über den Kommunikationsbus Strom, der bei Abwesenheit von Datensignalen über einen zwischen den Eingangsanschlüssen (22) einerseits und den Spannungsanschlüssen (30, 32) andererseits geschalteten Schalter (26) sowie über die Spannungsanschlüsse (30, 32) fließt, während eines Signal-Zeitintervalls über den Schalter (26) in eine parallel zu der Last liegende Abzweigschaltung geleitet wird, sodass ein Bypass-Strom fließt,
- wobei die Vorschalteinrichtung eine zum Schalter in Reihe geschaltete Stromquelle (24) aufweist, die einen Strom (I_{SP}) abgibt, dessen Stromstärke konstant ist, solange kein Regeln erfolgt, und dessen Stromstärke geändert wird, wenn aufgrund eines Abweichens der Busgerätespannung (U_{VSP}) von einem Sollwert (V_{REF}) ein Regeln eingeleitet wird,
**dadurch gekennzeichnet, dass**
beim Regeln eine Auswahl zwischen zumindest zwei Regelszenarien anhand vorgegebener Kriterien erfolgt, wobei bei Auswahl eines ersten Regelszenarios die Stromstärke durch die Stromquelle mit einer ersten Änderung pro Zeiteinheit, die aufgrund einer Kennlinie dieser ersten Änderung bezüglich einer vorgegebenen Größe festgelegt wird, geändert wird und bei Auswahl eines zweiten Regelszenarios die Stromstärke durch die Stromquelle mit einer zweiten Änderung pro Zeiteinheit, die aufgrund einer Kennlinie dieser zweiten Änderung bezüglich einer vorgegebenen Größe festgelegt wird, geändert wird, wobei sich die beiden Kennlinien voneinander unterscheiden,
wobei die erste Änderung kleiner als die zweite Änderung ist und bei Empfang von Datensignalen das erste Regelszenario gewählt wird und bei Änderungen der Last das zweite Regelszenario gewählt wird.

2. Verfahren nach Anspruch 1, **dadurch gekennzeichnet, dass** die Auswahl in Abhängigkeit von der Busspannung (U_{BUS}) und der Busgerätespannung (U_{VSP}) erfolgt.

3. Verfahren nach Anspruch 2, **dadurch gekennzeichnet, dass** stets mit dem ersten Regelszenario begonnen wird und in Abhängigkeit von der Größe eines Spannungsunterschiedes zwischen der Busspannung (U_{BUS}) und der Busgerätespannung (U_{VSP}) zum zweiten Regelszenario übergegangen wird.

4. Verfahren nach Anspruch 3, **dadurch gekennzeichnet, dass** zum zweiten Regelszenario genau dann übergangen wird, wenn der sich aus einem Subtrahieren der Busgerätespannung (U_{BUS}) und einer an der Stromquelle abfallenden Spannung (U_{DIF}) von der Busspannung ergebende Wert einen Schwellwert (U_{VCR}) überschreitet.

5. Verfahren nach einem der vorhergehenden Ansprüche, **dadurch gekennzeichnet, dass** die in den Regelszenarien zur Festlegung der ersten Änderung pro Zeiteinheit und/oder zur Festlegung der zweiten Änderung pro Zeiteinheit verwendete Kennlinie eine Kennlinie der jeweiligen Änderung in Abhängigkeit von der Stromstärke (I_{VSP}) des über die Spannungsanschlüsse (30, 32) fließenden Stroms ist.

6. Vorschalteinrichtung zum Bereitstellen einer Busgerätespannung (U_{VSP}) für ein Busgerät (14), wenn die Vorschalteinrichtung an einen Kommunikationsbus (10, 12) angeschlossen ist, wobei von einem Eingang (22) der Vorschalteinrichtung zu einem Ausgang (30) der Vorschalteinrichtung über eine Stromquelle (24) und einen Schalter (26) eine elektrische Verbindung hergestellt ist, wobei bei einem Schalten des Schalters (26), insbesondere bei Empfang von Datensignalen am Eingang (22), eine Umschaltung auf eine elektrische Verbindung des Eingangs (22) über die Stromquelle (24) zu einer Abzweigschaltung erfolgt, wobei die Abzweigschaltung parallel zum Ausgang (30, 32) geschaltet ist, und wobei eine am Ausgang (30, 32) anliegende Spannung durch Variation eines von der Stromquelle abgegebenen Stroms (I_{SP}) regelbar ist,
**dadurch gekennzeichnet, dass**
die Vorschalteinrichtung Mittel zum Steuern umfasst, die die Stromquelle (24) derart ansteuern, dass der abgegebene Strom während des Regelns mit vorgegebener zeitlicher Änderung geändert wird, wobei für die Vorgabe der zeitlichen Änderung eine Auswahl aus zwei verschiedenen Kennlinien ermöglicht ist, anhand derer die Änderung festgelegt wird,
wobei eine erste Änderung kleiner als eine zweite Änderung ist und bei Empfang von Datensignalen die erste Änderung gewählt wird und bei Änderungen der Last die zweite Änderung gewählt wird.

7. Vorschalteinrichtung nach Anspruch 6, **dadurch gekennzeichnet, dass** die Mittel zum Steuern der Stromquelle dazu ausgelegt sind, die Auswahl in Abhängigkeit von der am Eingang anliegenden Spannung (U_{BUS}) und von der am Ausgang anliegenden Spannung (U_{VSP}) zu treffen.

8. Vorschalteinrichtung nach Anspruch 7, **dadurch gekennzeichnet, dass** sie einen Operationsverstärker (34) umfasst, dessen einer Eingang mit dem Ausgang der Vorschalteinrichtung (30) verbunden ist, an dessen zweitem Eingang eine Spannung (V_{REF}) zugeführt wird, die von der am Eingang (22) der Vorschalteinrichtung anliegenden Spannung (U_{BUS}) abhängig ist, und dessen Ausgang (38) mit den Mitteln zum Steuern der Stromquelle verbunden ist.

## Claims

1. Method of regulating a bus device voltage (U_{VSP}) through a preswitching device which is supplied via a communication bus with a bus voltage (U_{BUS}) which is present between input terminals (22) of the preswitching device,
- wherein the preswitching device features power connections (30, 32) for the bus device voltage (U_{VSP}), at which a variable load is present,
- wherein on receipt of data signals over the communication bus, current, which flows in the absence of data signals via a switch (26) connected between the input terminals (22) on the one side and the power connections (30, 32) on the other side as well as via the power connections (30, 32), is directed during a signal time interval via the switch (26) into a branch circuit lying parallel to the load, so that a bypass current flows,
- wherein the preswitching device has a current source (24) connected in series to the switch (26) which outputs a current (I_{SP}), the dielectric strength of which is constant, provided no regulation occurs, and the dielectric strength of which is changed if, as a result of a deviation of the bus device voltage (U_{VSP}) from a reference value (V_{REF}), regulation is initiated, **characterised in that**
during regulation, a choice is made between at least two regulation scenarios based on predetermined criteria wherein, in the event of a first regulation scenario being selected, the dielectric strength through the current source is changed with a first change per unit of time, which is defined on the basis of a characteristic curve in relation to a predetermined variable, and in the event of a second regulation scenario being selected, the dielectric strength through the current source is changed with a second change per unit of time, which is defined on the basis of a characteristic curve of this second change in relation to a predetermined variable, wherein the two characteristic curves differ from one another,
wherein the first change is smaller than the second change and on receipt of data signals the first regulation scenario is selected and on changes in the load the second regulation scenario is selected.

2. Method according to claim 1, **characterised in that** the selection is made as a function of the bus voltage (U_{BUS}) and the bus device voltage (U_{VSP}).

3. Method according to claim 2, **characterised in that** the process always begins with the first regulation scenario and the transition to the second regulation scenario is made as a function of the size of a voltage difference between the bus voltage (U_{BUS}) and the bus device voltage (U_{VSP}).

4. Method according to claim 3, **characterised in that** a transition to the second regulation scenario is made precisely when the value produced by a subtraction of the bus device voltage (UBUS) and a voltage dropping at the power source (UDIF) from the bus voltage exceeds a threshold value (UVCR).

5. Method according to one of the preceding claims, **characterised in that** the characteristic curve used in the regulation scenario to define the first change per unit of time and/or to define the second change per unit of time is a characteristic curve of the respective change depending on the dielectric strength (I_{VSP}) of the current flowing via the power connections (30, 32).

6. Preswitching device for providing a bus device voltage (U_{VSP}) for a bus device (14), when the preswitching device is connected to a communication bus (10, 12), wherein an electrical connection is established from an input (22) of the preswitching device to an output (30) of the preswitching device via a power source (24) and a switch (26) wherein, when the switch (26) is switched especially on receipt of data signals at the input (22), a switchover is made to an electrical connection of the input (22) via the power source (24) to a branch circuit which is not connected in parallel to the output (30, 32), and wherein a voltage present at the output (30, 32) is able to be regulated by variation of a current (I_{SP}) issued by the current source, **characterised in that**,
the preswitching device comprises means for control which control the power source (24) such that the current output during the regulation is changed with a predetermined change over time, wherein for the predetermination of the change over time a selection is made possible from two different characteristic curves, on the basis of which the change is defined,
wherein the first change is smaller than the second change and on receipt of data signals the first change is selected and on changes in the load the second change is selected.

7. Preswitching device according to claim 6, **characterised in that** the means for controlling the power source are designed to make the choice as a function of the voltage present at the input (U_{BUS}) and of the voltage (U_{VSP}) present at the output.

8. Preswitching device according to claim 7, **characterised in that** it comprises an operational amplifier (34) the one input of which is linked to the output of the preswitching device (30), to the second input of which a voltage (V_{REF}) is supplied which depends on the voltage (U_{BUS}) present at the input (22) of the preswitching device, and the output (38) of which is connected to the means for controlling the power source.

## Revendications

1. Procédé pour régler une tension d'appareil de bus (U_{VSP}) par un dispositif d'entrée sur lequel est envoyée, via un bus de communication, une tension de bus (U_{BUS}) qui est appliquée entre des connexions d'entrée (22) du dispositif d'entrée,
le dispositif d'entrée présentant des connexions de tension (30, 32) pour la tension d'appareil de bus (U_{VSP}) auxquels est appliquée une charge variable,
à la réception de signaux de données via le bus de communication étant dirigé, vers un circuit de dérivation parallèle à la charge, un courant qui, en l'absence de signaux de données, passe par un commutateur (26) monté entre les connexions d'entrée (22) d'une part et les connexions de tension (30, 32) d'autre part, ainsi que par les connexions de tension (30, 32), de sorte qu'on a un courant de bypass,
le dispositif d'entrée comportant une source de courant (24) qui est montée en série avec le commutateur et qui délivre un courant (I_{SP}) dont l'intensité est constante tant qu'aucun réglage n'a lieu et dont l'intensité se modifie si un réglage est initialisé en raison d'un écart de la tension d'appareil de bus (U_{VSP}) par rapport à une valeur de consigne (V_{REF}),
**caractérisé en ce que**, lors du réglage, une sélection est effectuée entre au moins deux scénarios de réglage à l'aide de critères prédéterminés, l'intensité du courant étant, à la sélection d'un premier scénario de réglage, modifiée par la source de courant au moyen d'une première modification par unité de temps qui est fixée sur la base d'une courbe caractéristique de cette première modification par rapport à une grandeur prédéterminée et étant, à la sélection d'un deuxième scénario de réglage, modifiée par la source de courant au moyen d'une deuxième modification par unité de temps qui est fixée sur la base d'une courbe caractéristique de cette deuxième modification par rapport à une grandeur prédéterminée, les deux courbes caractéristiques étant différentes l'une de l'autre, et la première modification étant inférieure à la deuxième modification et le premier scénario de réglage étant sélectionné à la réception de signaux de données et le deuxième scénario de réglage étant sélectionné en cas de modifications de la charge.

2. Procédé selon la revendication 1, **caractérisé en ce que** la sélection s'effectue en fonction de la tension de bus (U_{BUS}) et de la tension d'appareil de bus (U_{VSP}).

3. Procédé selon la revendication 2, **caractérisé en ce qu'**on commence toujours par le premier scénario de réglage et passe au deuxième scénario de réglage en fonction de la grandeur d'une différence de tension entre la tension de bus (U_{BUS}) et la tension d'appareil de bus (U_{VSP}).

4. Procédé selon la revendication 3, **caractérisé en ce qu'**on passe au deuxième scénario de réglage exactement au moment où la valeur qui est obtenue en soustrayant de la tension de bus la tension d'appareil de bus (U_{BUS}) et une tension (U_{DIF}) en chute au niveau de la source de courant dépasse une valeur seuil (U_{VCR}).

5. Procédé selon l'une des revendications précédentes, **caractérisé en ce que** la courbe caractéristique utilisée dans les scénarios de réglage pour fixer la première modification par unité de temps et/ou pour fixer la deuxième modification par unité de temps est une courbe caractéristique de la modification respective en fonction de l'intensité de courant (I_{VSP}) du courant qui passe par les connexions de tension (30, 32).

6. Dispositif d'entrée pour fournir une tension d'appareil de bus (U_{VSP}) pour un appareil de bus (14) lorsque le dispositif d'entrée est connecté à un bus de communication (10, 12), une liaison électrique étant établie d'une entrée (22) du dispositif d'entrée vers une sortie (30) du dispositif d'entrée en passant par une source de courant (24) et un commutateur (26), une commutation sur une liaison électrique de l'entrée (22) s'effectuant via la source de courant (24) vers un circuit de dérivation lors d'une commutation du commutateur (26), et plus particulièrement à la réception de signaux de données à l'entrée (22), le circuit de dérivation étant monté en parallèle à la sortie (30, 32) et une tension appliquée à la sortie (30, 32) pouvant être réglée par variation d'un courant (I_{SP}) délivré par la source de courant,
**caractérisé en ce que**
le dispositif d'entrée comprend des moyens de commande qui commandent la source de courant (24) de manière telle que le courant délivré est modifié pendant le réglage au moyen de la modification temporelle prédéterminée, une sélection de deux courbes caractéristiques différentes à l'aide desquelles la modification est fixée étant rendue possible pour la spécification de la modification temporelle, une première modification étant inférieure à une deuxième modification et la première modification étant sélectionnée à la réception de signaux de données et la deuxième modification étant sélectionnée en cas de modifications de la charge.

7. Dispositif d'entrée selon la revendication 6, **caractérisé en ce que** les moyens de commande de la source de courant sont conçus pour effectuer la sélection en fonction de la tension (U_{BUS}) appliquée à l'entrée et de la tension (U_{VSP}) appliquée à la sortie.

8. Dispositif d'entrée selon la revendication 7, **caractérisé en ce qu'**il comprend un amplificateur opérationnel (34) dont une entrée est reliée à la sortie du dispositif d'entrée (30), sur la deuxième entrée duquel est envoyée une tension (V_{REF}) qui dépend de la tension (U_{BUS}) appliquée à l'entrée (22) du dispositif d'entrée et dont la sortie (38) est reliée aux moyens de commande de la source de courant.
